# EUROPÄISCHE PATENTSCHRIFT

(11) **EP 2 069 161 B1**
(45) Veröffentlichungstag und Bekanntmachung des Hinweises auf die Patenterteilung: **13.07.2011**
(21) Anmeldenummer: 06818374.8
(22) Anmeldetag: 06.11.2006
(51) Int. Cl.: B60L 1/00, B62D 5/04, B62D 6/00

(54) **VERFAHREN UND BORDNETZ ZUR VORAUSSCHAUENDEN ERHÖHUNG DER BORDNETZSPANNUNG**
METHOD AND ON-BOARD VEHICLE POWER SYSTEM FOR PREDICTIVELY INCREASING THE ON-BOARD VEHICLE POWER SYSTEM VOLTAGE
PROCEDE ET RESEAU DE BORD POUR L'AUGMENTATION ANTICIPEE DE LA TENSION DU RESEAU DE BORD

(43) Veröffentlichungstag der Anmeldung: 17.06.2009
(73) Patentinhaber: Bayerische Motoren Werke Aktiengesellschaft, 80809 München (DE)
(72) Erfinder: LEMKE, Olaf, 80995 München (DE); HAUSCHILD, Martin, 81249 München (DE)
(74) Vertreter: Grüter, Klaus Peter
(86) Internationale Anmeldenummer: PCT/EP2006/010590
(87) Internationale Veröffentlichungsnummer: WO 2008/055512

(56) Entgegenhaltungen:
- EP-A- 1 564 862
- EP-A1- 0 360 470
- WO-A-00/14402
- DE-C1- 4 338 068
- JP-A- 2006 282 141

## Beschreibung

Die Erfindung betrifft insbesondere ein Verfahren zur Reduzierung des Energieverbrauchs eines Kraftfahrzeugs mit mindestens einem elektrischen Bordnetz an das mindestens ein elektrischer Verbraucher angeschlossen ist.

Die Anzahl der elektrischen Verbraucher in Kraftfahrzeugen hat erheblich zugenommen. Um den CO₂ - Ausstoß im Fahrzeug zu reduzieren, werden hydraulisch arbeitende Verbraucher durch elektrische Verbraucher ersetzt. So ersetzt ggf. beispielsweise eine elektrische Lenkung (EPS) eine hydraulische Lenkung des Kraftfahrzeugs. Solche elektrischen Verbraucher können jedoch kurzzeitig eine hohe Leistungsanforderung an das Fahrzeugbordnetz stellen. Daraus resultiert auch eine hohe Anforderung an die Bordnetzstabilität des Kraftfahrzeugs. Insbesondere muss bei kurzzeitig auftretenden hohen Belastungen eine ausreichend hohe elektrische Spannung bzw. elektrische Leistung zur Verfügung stehen.

Aufgabe der Erfindung ist es, ein Verfahren anzugeben, dass die Realisierung eines leistungsfähigen Bordnetzes und zudem die Reduzierung des Energieverbrauchs eines Kraftfahrzeugs ermöglicht.

Diese Aufgabe wird durch ein Verfahren bzw. ein Bordnetz mit den Merkmalen des betreffenden unabhängigen Anspruchs gelöst. Vorteilhafte Ausgestaltungen der Erfindung sind Gegenstand der abhängigen Patentansprüche.

Ein wesentlicher Aspekt der Erfindung besteht darin, dass das Spannungsniveau und/oder Leistungsniveau des elektrischen Bordnetzes in einem ersten Betriebszustand des Kraftfahrzeugs auf einem ersten niedrigen Niveau gehalten wird. In diesem ersten Betriebszustand ist der Energieverbrauch und damit der CO₂ Ausstoß reduziert.

In einem zweiten Betriebszustand wird das Spannungsniveau und/oder Leistungsniveau des elektrischen Bordnetzes Betriebszustand des Kraftfahrzeugs temporär auf ein zweites höheres Niveau gebracht wird. In diesem zweiten Betriebszustand werden insbesondere "leistungshungrige" Verbraucher mit einer ausreichend hohen elektrischen Spannung und/oder elektrischen Leistung aus dem Bordnetz versorgt. Diese Verbraucher reagieren dann in der erwarteten, insbesondere komfortablen Weise. Wird beispielsweise eine elektrische Lenkung bei einem Wendemanöver bzw. bei einem Wendevorgang lediglich auf dem niedrigen Spannungs- und/oder Leistungsniveau des ersten Betriebszustands betrieben, ist die Lenkung schwergängig, was den Fahrer insbesondere bei einem in der Regel schnell auszuführenden Wendemanöver verunsichert und eine deutliche Komforteinbuße bedeutet.

Um den zweiten Betriebszustand ausreichend frühzeitig, jedoch aus Gründen eines geringen CO₂-Ausstoße im ersten Betriebszustand nur erforderlichenfalls, herbeizuführen, wird erfindungsgemäß vorgeschlagen, dass eine im Fahrzeug vorgesehene Fahrsituations-Erfassungseinrichtung eine weitgehend unmittelbar bevorstehende besondere Fahrsituation aufgrund des bisherigen Verhaltens des Fahrers beim Steuern des Fahrzeugs im Voraus erkennt und veranlasst, dass das Spannungsniveau und/oder Leistungsniveau des elektrischen Bordnetzes temporär auf das zweite höhere Niveau gebracht wird. "Ausreichend frühzeitig" bedeutet vorzugsweise so rechtzeitig, dass der zweite Betriebszustand zum Zeitpunkt des Beginns des erwarteten Wendevorgangs eingestellt ist. "Temporär" bedeutet vorzugsweise, dass die Zeitdauer so bemessen ist, dass die bevorstehende Fahrsituation unter Beteilung der entsprechenden elektrischen Verbraucher vom Fahrer sicher und ohne Komforteinbuße bewältigt werden kann.

Bei einer Ausführungsform der Erfindung ist vorgesehen, dass der elektrische Verbraucher eine elektrisch betätigte Lenkung des Kraftfahrzeugs ist und die weitgehend unmittelbar bevorstehende besondere Fahrsituation ein Wendevorgang ist. Dies ist eine Fahrsituation bei der sich eine niedrige elektrische Spannung im Bordnetz besonders unangenehm für den Fahrer bemerkbar machen kann.

Bei einer Ausgestaltung der Erfindung ist vorgesehen, dass die Stellung des Fahr- bzw. Gaspedals von der Fahrsituations-Erfassungseinrichtung erfasst wird, und die elektrische Spannung und/oder elektrische Leistung erhöht wird, wenn sich das Fahrpedal bzw. Gaspedal weitgehend in seiner Ruhestellung befindet und mindestens eine weitere Fahrsituation eintritt. Für einen bevorstehenden Wendevorgang ist dies charakteristisch und daher besonders aussagekräftig für eine frühzeitige Erkennung eines Wendevorgangs.

Bei einer Weiterbildung der Erfindung ist vorgesehen, dass die Beschleunigung und die Geschwindigkeit des Fahrzeugs von der Fahrsituations-Erfassungseinrichtung erfasst wird, und die elektrische Spannung und/oder Leistung erhöht wird, wenn die Beschleunigung des Fahrzeugs negativ ist, die Geschwindigkeit einen vorbestimmten Schwellenwert unterschreitet und mindestens eine weitere Fahrsituation eintritt. Auch dies ist charakteristisch für einen bevorstehenden Wendevorgang und liefert ein wichtiges Indiz für einen bevorstehenden Wendevorgang.

Bei einer anderen Ausgestaltung der Erfindung wird der Lenkwinkel der elektrischen Lenkung des Fahrzeugs von der Fahrsituations-Erfassungseinrichtung erfasst. Die elektrische Spannung und/oder Leistung wird erhöht, wenn der Absolutwert des Lenkwinkels größer als ein vorbestimmter Schwellenwert ist und mindestens eine weitere Fahrsituation eintritt. Dies kann ein Indiz dafür sein, dass der Fahrer beginnt, einen Schlenker und/oder ein Wendemanöver zu fahren. Da ein Schlenker von zahlreichen Fahrern vor einem Wendevorgang gefahren wird, ist dies ggf. ein weiteres hilfreiches Kriterium, um einen bevorstehenden Wendevorgang ausreichend frühzeitig zu erkennen.

Bei einer weiteren Ausgestaltung der Erfindung ist vorgesehen, dass der Lenkwinkel der elektrischen Lenkung des Fahrzeugs von der Fahrsituations-Erfassungseinrichtung erfasst wird, und die elektrische Spannung und/oder Leistung erhöht wird, wenn der Absolutwert des Lenkwinkels größer als eine vorbestimmte geschwindigkeitsabhängige enkschwelle bzw. Lenkwinkelschwelle ist und mindestens eine weitere Fahrsituation eintritt. Fährt der Fahrer keinen Schlenker vor einem Wendevorgang, kann dieses Charakteristikum eines bevorstehenden Wendevorgangs das "Schlenker-Kriterium" ersetzen und die Zuverlässigkeit der Voraussage eines bevorstehenden Wendevorgangs erhöhen.

Bei einer Weiterbildung der Erfindung ist vorgesehen, dass die Fahrsituations-Erfassungseinrichtung überprüft, ob der Bremsdruck höher als ein vorbestimmter Bremsdruck bzw. ein Toleranzdruck ist und zudem überprüft, ob die Geschwindigkeit kleiner als ein vorbestimmter beschleunigungsabhängiger Geschwindigkeitswert bzw. eine dynamische Wende-Schwelle ist. Hierdurch lässt sich die Zuverlässigkeit der Prädiktion eines Wendevorgangs weiter steigern.

Die Erfindung schlägt zudem ein Bordnetz eines Kraftfahrzeugs vor, das eine programmgesteuerte Fahrsituations-Erfassungseinrichtung aufweist, die ein erfindungsgemäßes Verfahren ausführt. Ferner wird eine programmgesteuerte Fahrsituations-Erfassungseinrichtung vorgeschlagen, die ein erfindungsgemäßes Verfahren ausführt oder deren Ausführung veranlasst.

Das erfindungsgemäße Verfahren wird nachfolgend anhand von Ablaufplänen am Beispiel eines Wendevorgangs näher erläutert. Gleiche Bezugszeichen zeigen gleiche oder gleich wirkende Funktionen. Es zeigen:
- Fig. 1: die Hauptfunktion 1 bzw. den ersten Teil des erfindungsgemäßen Verfahrens;
- Fig. 2: die Hauptfunktion 2 bzw. den zweiten Teil des erfindungsgemäßen Verfahrens;
- Fig. 3: die Hauptfunktion 3 bzw. den dritten Teil des erfindungsgemäßen Verfahrens;
- Fig. 4: die Unterfunktion "Lenkschwelle" des erfindungsgemäßen Verfahrens; und
- Fig. 5: die Unterfunktion "Dynamische Wendeschwelle".

Der Ausgangspunkt für das erfindungsgemäße Verfahren ist der Folgende. Das Kraftfahrzeug ist mit einer elektrischen Lenkung ausgestattet. Die elektrische Lenkung benötigt bei der manuellen Durchführung eines Wendemanövers bzw. eines Wendevorgangs eine ausreichend hohe elektrische Spannung. Wird das Wendemanöver aus Gründen einer CO₂-Reduzierung beim Betrieb des Kraftfahrzeugs bei einer abgesenkten Bordnetzspannung durchgeführt, ist die Lenkung schwergängig. Dies ist für den Fahrer, insbesondere bei einem schnell auszuführenden Wendemanöver, sehr unangenehm. Durch das erfindungsgemäße Verfahren kann das unmittelbare Bevorstehen eines Wendemanövers sehr zuverlässig erkannt, die elektrische Bordnetz-Spannung dann kurz vor dem Wendemanöver bis kurz nach dem Wendemanöver erhöht und dann wieder zur erneuten CO₂-Reduzierung abgesenkt werden.

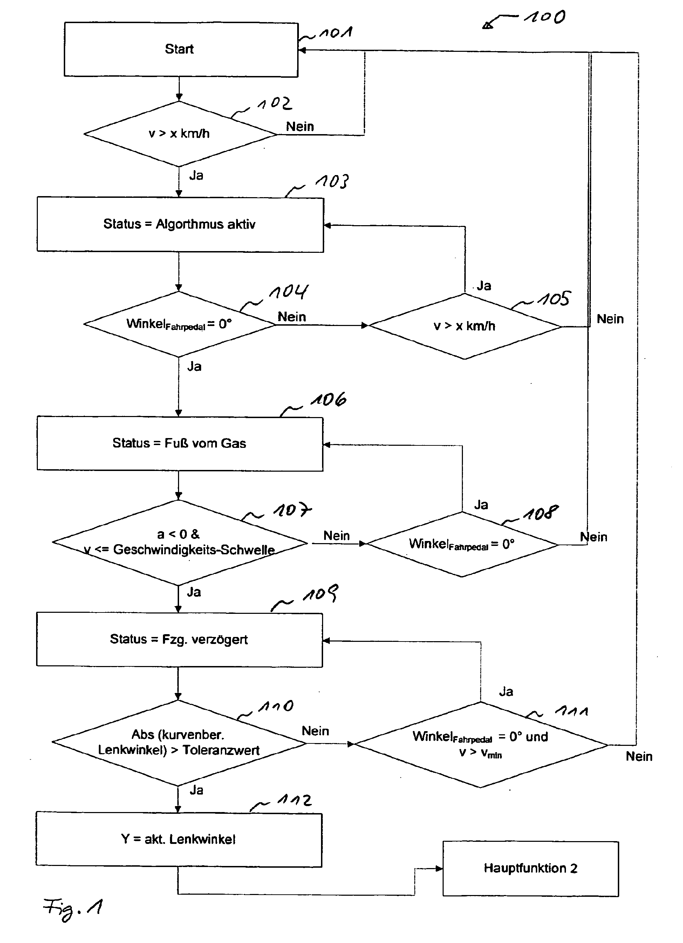

Figur 1 zeigt den ersten Teil 100 (Hauptfunktion 1) des erfindungsgemäßen Verfahrens zur Erkennung, ob das Kraftfahrzeug in Kürze ein Wendemanöver vornehmen wird. Im Schritt 101 beginnt das erfindungsgemäße Verfahren. Im Schritt 102 wird verglichen, ob das Fahrzeug eine vorbestimmte Geschwindigkeit x überschreitet. Falls nein, wird der Vergleich erneut ausgeführt. Falls ja, ist das erfindungsgemäße Verfahren zur Erkennung eines bevorstehenden Wendemanövers aktiv, wie im Status 103 dargestellt.

Im Schritt 104 wird verglichen, ob das Fahr- bzw. Gaspedal betätigt ist, d.h. ob der Winkel des Pedals 0 Grad (Ruhestellung) ist. Falls nein, wird im Schritt 105 überprüft, ob die Geschwindigkeit des Fahrzeugs größer als die vorbestimmte Geschwindigkeit x ist. Fall ja, wird der Schritt 104 erneut ausgeführt. Falls nein, beginnt das Verfahren erneut mit dem Schritt 101. Falls der Vergleich im Schritt 104 positiv verläuft, liegt der der Status "Fuß vom Gas" vor, wie im Status 106 angegeben.

Im Schritt 107 wird verglichen, ob die Beschleunigung des Fahrzeugs negativ ist (a<0) und ob die Geschwindigkeit kleiner als oder gleich einer vorbestimmten Geschwindigkeit ist (v<= Geschwindigkeitsschwelle). Falls nein, wird im Schritt 108 erneut die Stellung des Gaspedals erfasst. Ist das Gas- bzw. Fahrpedal nicht im Ruhezustand, beginnt das Verfahren ab dem Schritt 101. Ist das Gas- bzw. Fahrpedal nicht ausgelenkt bzw. betätigt, gilt dies als Status 106 und der Vergleich 107 läuft erneut ab. Ist das Ergebnis des Vergleichs 107 "ja", ist der Status des Fahrzeugs "Fahrzeug verzögert" (Status 109).

Unter dem nachfolgend verwendeten Begriff "kurvenbereinigter Lenkwinkel" ist folgendes zu verstehen. Bewegt sich das Fahrzeug auf einer geraden Strasse, so ist der Lenkwinkel bzw. die Stellung des Lenkrads 0 Grad, d.h. Geradeausfahrt. Fährt das Fahrzeug in einer Kurve, ist der Lenkwinkel verschieden von 0 Grad. Handelt es sich beispielsweise um eine gleichförmige Linkskurve, ist der Lenkwinkel für die Zeitdauer des Durchfahrens der gleichförmigen Linkskurve beispielsweise - 10 Grad. Um diese Form der Auslenkung des Lenkrads (kein bewusstes Lenken) von einem tatsächlichen Lenkvorgang (bewusster Lenkvorgang) auch im Fall einer Kurvenfahrt unterscheiden zu können, wird erfindungsgemäß ermittelt, wie groß der mittlere Lenkwinkel für einen zurückliegenden kurzen Zeitraum von beispielsweise 3 Sekunden war, und ermittelt, wie groß der Lenkwinkel aktuell ist. Dann wird die Differenz zwischen dem mittleren Lenkwinkel und dem aktuellen Lenkwinkel gebildet. Diese Differenz ist der kurvenbereinigte Lenkwinkel.

Im Schritt 110 wird verglichen, ob der Absolutwert des kurvenbereinigten Lenkwinkels größer als ein Toleranzwert ist, d.h. "Abs (kurvenbereinigter Lenkwinkel)>Toleranz-Wert". Ein Fahrer wird das Lenkrad beim Fahren stets etwas hin und her drehen ohne hierdurch lenken zu wollen.

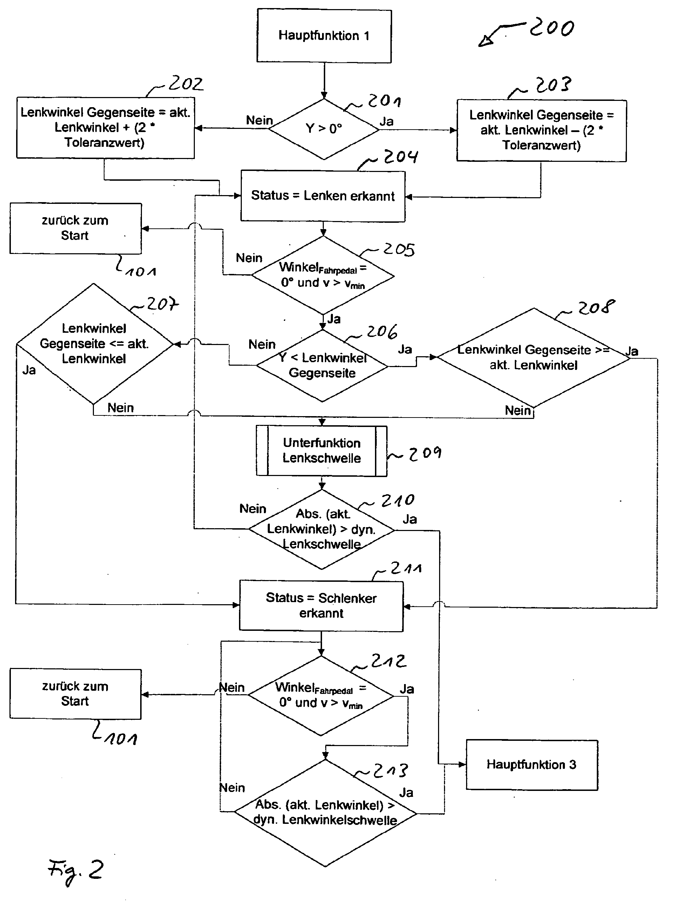

Falls nein, wird im Schritt 111 überprüft, ob das Gas- bzw. Fahrpedal nicht ausgelenkt und die Geschwindigkeit des Fahrzeugs größer als eine vorbestimmte Minimal-Geschwindigkeit ist. Falls ja, befindet sich das Fahrzeug im Status 109. Falls nein, beginnt das Verfahren erneut mit dem Status 101 "Start". Ist das Ergebnis des Schritts 110 "ja", wird der aktuelle Lenkwinkel y im Status 112 festgehalten und es wird davon ausgegangen, dass der erste Teil eines "Schlenkers" vom Fahrer herbeigeführt worden sein könnte. Nachfolgend geht es mit der in Figur 2 dargestellten Hauptfunktion 2 weiter.

Figur 2 zeigt den zweiten Teil 200 (Hauptfunktion 2) des erfindungsgemäßen Verfahrens. Im zweiten Teil 200 wird in den Schritten 201 bis 211 ermittelt, ob der Fahrer einen "Schlenker" fährt oder nicht, was ggf. ein weiteres Indiz für einen bevorstehenden Wendevorgang ist. Viele - aber nicht alle - Fahrer fahren vor einem Wendevorgang einen Schlenker.

Was unter dem Begriff "Schlenker" zu verstehen ist, soll zunächst für den Fall einer geraden Strasse erläutert werden. Folgt der Fahrer dem geraden Straßenverlauf bleibt das Lenkrad weitgehend in seiner Ruhestellung. Bei einer ersten Form des Schlenkers wird zunächst nach rechts deutlich über die Ruhestellung des Lenkrads hinaus und dann nach links deutlich über die Ruhestellung hinaus gelenkt. Hierbei gelangt der Fahrer bei Rechtsverkehr an den rechten Fahrbahnrand und die Front des Fahrzeugs zeigt bereits etwas mehr in die Gegenrichtung als bei der Geradeausfahrt. Bei einer zweiten Form eines Schlenkers lenkt der Fahrer zunächst nach links deutlich über die Ruhestellung des Lenkrads hinaus, dann nach rechts deutlich über die Ruhestellung hinaus.

Wird ein Schlenker gefahren, wenn sich das Fahrzeug beispielsweise auf einer Linkskurve bewegt, bewegt sich die Fahrbahn sozusagen unter dem Fahrzeug nach links - im Unterschied zu einer geraden Strasse. Während der normalen Kurvenfahrt ist das Lenkrad entsprechend der Krümmung der Kurve ggü. der 0-Lage verdreht, d.h. der Lenkwinkel ist bei einer Linkskurve kleiner als 0 Grad und bei einer Rechtskurve größer als 0 Grad.

Um auch bei einer Kurvenfahrt einen Schlenker erkennen zu können, wird im Schritt 201 überprüft, ob der Lenkwinkel y größer als 0 Grad ist. Falls nein, gilt Lenkwinkel Gegenseite = Lenkwinkel + ( 2 * Toleranzwert), d.h. der Status 202. Falls ja, gilt Lenkwinkel Gegenseite = Lenkwinkel - (2 * Toleranzwert), d.h. der Status 203. In beiden Fällen gilt der "Status = Lenken erkannt" 204.

Im Schritt 205 wird erneut überprüft, ob das Fahrpedal nicht ausgelenkt ist und ob die Geschwindigkeit größer als die vorbestimmte Minimal-Geschwindigkeit ist. Falls nein, beginnt das erfindungsgemäße Verfahren erneut mit "Start", d.h. mit Status 101.

Falls ja, wird im Schritt 206 überprüft, ob der aktuelle Lenkwinkel y kleiner als der "Lenkwinkel Gegenseite" (vgl. Status 202 und 203) ist. Falls nein, wird im Schritt 207 überprüft, ob der Lenkwinkel Gegenseite kleiner als oder gleich dem aktuellen Lenkwinkel ist. Falls ja, gilt dies als Schlenker, wie im Status 211 "Schlenker erkannt" angegeben.

Falls ja, wird im Schritt 208 überprüft, ob der "Lenkwinkel Gegenseite" größer als oder gleich dem aktuellen Lenkwinkel ist. Falls ja, gilt dies als Schlenker, wie im Status 211 angegeben. Ist das Ergebnis des Vergleichs im Schritt 207 oder 208 "Nein" wird die Unterfunktion "Lenkschwelle" 209 im Rahmen des erfindungsgemäßen Verfahrens durchschritten.

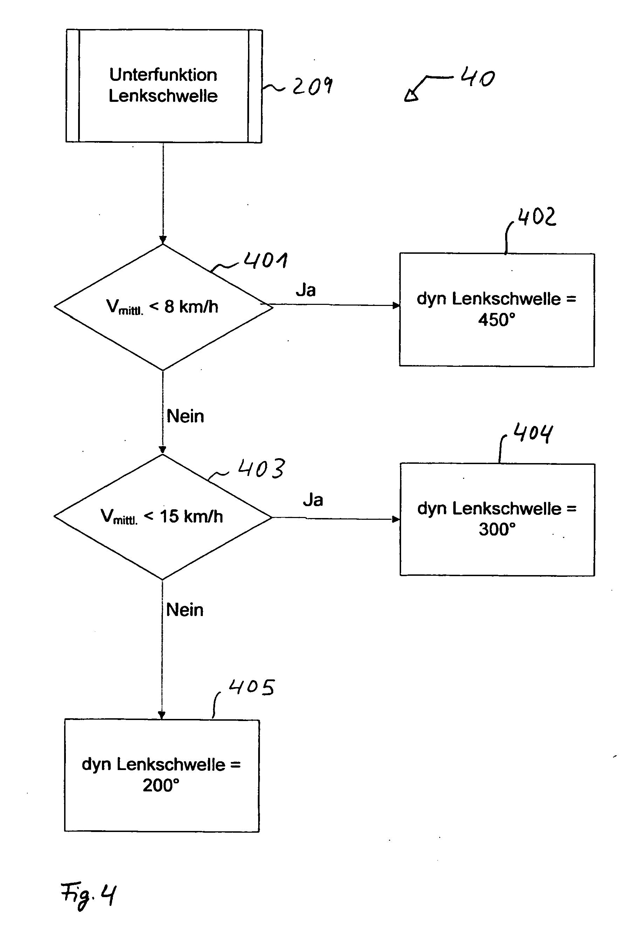

Figur 4 zeigt die Unterfunktion "Lenkschwelle" 400 des erfindungsgemäßen Verfahrens bei der eine geschwindigkeitsabhängige und damit dynamische Lenkschwelle für die weiteren Verfahrensschritte vorgegeben wird. Im Schritt 401 wird überprüft, ob die über einen bestimmten Zeitraum gemittelte Geschwindigkeit des Fahrzeugs kleiner als 8 km/h ist. Der Zeitraum kann beispielsweise zwischen 3 und 10 Sekunden betragen" Falls ja, wird die dynamische Lenkschwelle mit 450 Grad (Status 402) festgesetzt. Beim Geradeauslauf des Fahrzeugs, d.h. bei einem nicht aus dieser Position ausgelenkten Lenkrad beträgt der Winkel 0 bzw. 360 Grad. Falls nein, wird im Schritt 403 überprüft, ob die mittlere Geschwindigkeit des Fahrzeugs kleiner als 15 km/h ist, d.h. in Kombination mit dem Schritt 401, ob die mittlere Geschwindigkeit zwischen 8 km/h und 15 km/h liegt. Falls ja, wird die dynamische Lenkschwelle mit 300 Grad festgesetzt (Status 404). Falls nein, d.h. ist die Geschwindigkeit größer als 15 km/h, wird die dynamische Lenkschwelle mit 200 Grad festgesetzt.

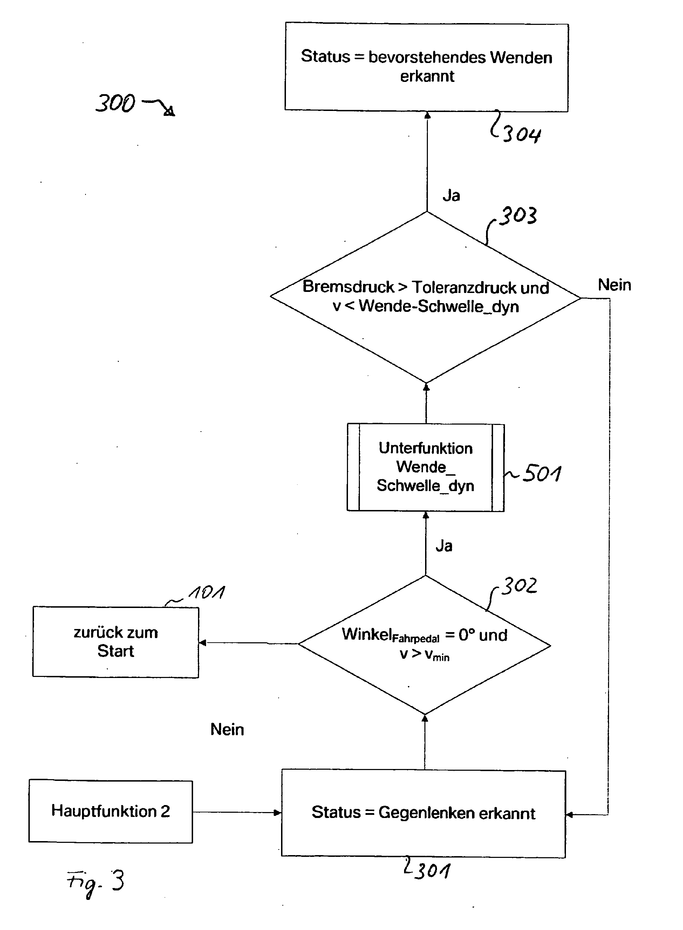

Im Schritt 210 wird überprüft, ob der Absolutwert des aktuellen Lenkwinkels größer als die dynamische Lenkschwelle für die aktuelle Fahrzeuggeschwindigkeit ist. Falls nein, beginnt das Verfahren erneut mit dem Status 204, d.h. "Lenken erkannt". Falls ja, wird das erfindungsgemäße Verfahren mit der Hauptfunktion 3 in Figur 3 fortgesetzt.

Gilt ein Schlenker als erkannt (Schritt 211) wird im Schritt 212 erneut überprüft, ob das Fahr- bzw. Gaspedal nicht betätigt ist (Winkel = 0 Grad) und ob die Geschwindigkeit größer als die vorbestimmte Minimal-Geschwindigkeit ist. Falls nein, beginnt das erfindungsgemäße Verfahren erneut mit "Start", d.h. ab dem Status 101. Falls ja, wird im Schritt 213 überprüft, ob der Absolutwert des aktuellen Lenkwinkels größer als die dynamische Lenkwinkelschwelle ist. Falls nein, wird der Vergleich im Schritt 212 wiederholt. Falls ja, liegt der Status "Gegenlenken erkannt " 301 vor und das Verfahren wird mit der in Figur 3 dargestellten Hauptfunktion 3 fortgesetzt.

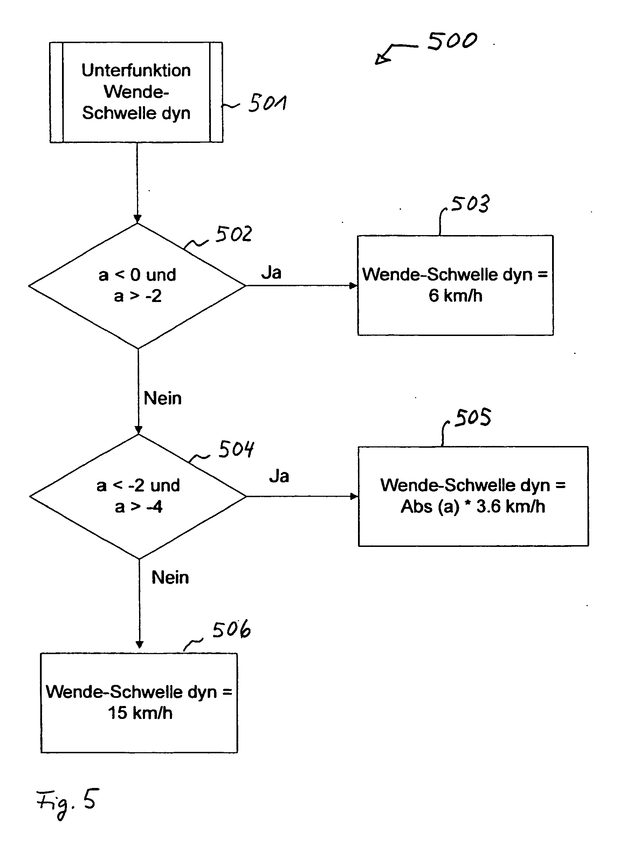

Im dritten Teil des erfindungsgemäßen Verfahrens, der in Figur 3 dargestellt ist, wird nun im Schritt 302 wiederum überprüft, ob das Gas- bzw. Fahrpedal nicht betätigt ist und ob die Geschwindigkeit des Fahrzeugs größer als die vorbestimmte Minimal-Geschwindigkeit ist. Falls nein, beginnt das Verfahren erneut mit "Start", d.h. ab Schritt 101. Falls ja, wird die in Figur 5 dargestellte Unterfunktion "Dynamische Wendeschwelle" 501 durchlaufen.

Bei der in Figur 5 dargestellten Unterfunktion "Dynamische Wendeschwelle" 501 wird im Schritt 502 überprüft, ob die die über die letzten Sekunden gemittelte negative Beschleunigung des Fahrzeugs zwischen 0 m/s² und - 2 m/s² ist. Falls ja, wird die dynamische Wendeschwelle im Schritt 503 mit dem Wert 6 km/h festgelegt. Falls nein, wird im Schritt 504 überprüft, ob die negative Beschleunigung zwischen -2 m/s² und - 4m/s² ist. Falls ja, wird die dynamische Wendeschwelle im Schritt 505 auf den Wert: Absolutwert der Beschleunigung mal Faktor 3,6 festgesetzt. Das Ergebnis ist ein Geschwindigkeitswert. Falls nein, wird die dynamische Wendeschwelle im Schritt 506 auf den Wert 15 km/h festgesetzt.

Nach dem Schritt 501 wird in dem in Figur 3 dargestellten Schritt 303 überprüft, ob der Bremsdruck höher als ein vorbestimmter Toleranz-Bremsdruck ist. Zudem wird überprüft, ob die aktuelle Geschwindigkeit des Fahrzeugs v kleiner als die bei der Unterfunktion "dynamische Wendeschwelle" festgesetzte dynamische Wendeschwelle ist. Falls nein, beginnt das erfindungsgemäße Verfahren erneut mit dem Schritt 301 in Figur 3.

Falls ja, gilt im Schritt 304 der "Status bevorstehendes Wenden erkannt". Mit dem Schritt 304 wird die Bordnetzspannung und/oder die Bordnetzleistung rechtzeitig, d.h. vor dem tatsächlichen Wendemanöver, auf das für das Wenden benötigte Spannungsniveau und/oder Leistungsniveau angehoben. Beim Wendevorgang steht der elektrischen Lenkung des Kraftfahrzeugs dann eine ausreichend hohe elektrische Spannung und/oder elektrische Leistung zur Verfügung und eine ansonsten vorhandene für den Fahrer unangenehme Schwergängigkeit der Lenkung tritt aufgrund des erfindungsgemäßen Verfahrens nicht auf.

Es versteht sich, dass die Erfindung auch in einer verschlechterten Ausführungsform ausgeführt werden kann, bei der das Spannungs- und/oder Leistungsniveau bereits früher im Verlauf des erfindungsgemäßen Verfahrens angehoben wird. Ggf. steigt dann aber das Risiko eines "Fehlalarms", d.h. das Spannungs- und/oder Leistungsniveau wird dann mitunter ohne tatsächlichen späteren Bedarf angehoben und die Energieersparnis sinkt.

## Patentansprüche

1. Verfahren zur Reduzierung des Energieverbrauchs eines Kraftfahrzeugs mit mindestens einem elektrischen Bordnetz an das mindestens ein elektrischer Verbraucher angeschlossen ist, **dadurch gekennzeichnet,**
- **dass** das Spannungsniveau und/oder Leistungsniveau des elektrischen Bordnetzes in einem ersten Betriebszustand des Kraftfahrzeugs auf einem ersten niedrigen Niveau gehalten wird,
- **dass** das Spannungsniveau und/oder Leistungsniveau des elektrischen Bordnetzes in einem zweiten Betriebszustand des Kraftfahrzeugs temporär auf ein zweites höheres Niveau gebracht wird, und
- eine im Fahrzeug vorgesehene Fahrsituations-Erfassungseinrichtung eine weitgehend unmittelbar bevorstehende besondere Fahrsituation (304) aufgrund des bisherigen Verhaltens des Fahrers (102, 104, 105, 107, 108, 110, 111, 201, 205, 206, 210, 212, 213, 302, 303, 401, 403) beim Steuern des Fahrzeugs und/oder des Fahrzeugs im Voraus erkennt und veranlasst, dass das Spannungsniveau und/oder Leistungsniveau des elektrischen Bordnetzes temporär auf das zweite höhere Niveau gebracht wird.

2. Verfahren nach Anspruch 1, **dadurch gekennzeichnet, dass** der elektrische Verbraucher eine elektrisch betätigte Lenkung des Kraftfahrzeugs ist und die weitgehend unmittelbar bevorstehende besondere Fahrsituation (304) ein Wendevorgang ist.

3. Verfahren nach Anspruch 1 oder 2, **dadurch gekennzeichnet, dass** die Stellung des Fahr- bzw. Gaspedals von der Fahrsituations-Erfassungseinrichtung erfasst wird, und die elektrische Spannung und/oder elektrische Leistung erhöht wird, wenn sich das Fahrpedal bzw. Gaspedal weitgehend in seiner Ruhestellung (104, 108, 111, 205, 212, 302) befindet und mindestens eine weitere Fahrsituation (107, 110, 111, 205, 210, 212, 213, 302, 303) eintritt.

4. Verfahren nach einem der vorstehenden Ansprüche, **dadurch gekennzeichnet, dass** die Beschleunigung und die Geschwindigkeit des Fahrzeugs von der Fahrsituations-Erfassungseinrichtung erfasst wird, und die elektrische Spannung und/oder Leistung erhöht wird, wenn die Beschleunigung des Fahrzeugs negativ ist, die Geschwindigkeit einen vorbestimmten Schwellenwert unterschreitet (107) und mindestens eine weitere Fahrsituation (110, 111, 205, 210, 212, 213, 302, 303) eintritt.

5. Verfahren nach einem der vorstehenden Ansprüche, **dadurch gekennzeichnet, dass** der Lenkwinkel der elektrischen Lenkung des Fahrzeugs von der Fahrsituations-Erfassungseinrichtung erfasst wird, und die elektrische Spannung und/oder Leistung erhöht wird, wenn der Absolutwert des Lenkwinkels größer als ein vorbestimmter Schwellenwert ist (110) und mindestens eine weitere Fahrsituation (107, 111, 205, 210, 212, 213, 302, 303) eintritt.

6. Verfahren nach einem der vorstehenden Ansprüche, **dadurch gekennzeichnet, dass** der Lenkwinkel der elektrischen Lenkung des Fahrzeugs von der Fahrsituations-Erfassungseinrichtung erfasst wird, und die elektrische Spannung und/oder Leistung erhöht wird, wenn der Absolutwert des Lenkwinkels größer als eine vorbestimmte geschwindigkeitsabhängige Lenkschwelle bzw. Lenkwinkelschwelle ist (210, 213) und mindestens eine weitere Fahrsituation (102, 104, 105, 107, 108, 110, 111, 201, 205, 206, 212, 302, 303, 401, 403) eintritt.

7. Verfahren nach Anspruch 2, **dadurch gekennzeichnet, dass** die Fahrsituations-Erfassungseinrichtung überprüft, ob das Fahrzeug einen Schlenker (211) fährt.

8. Verfahren nach einem der vorstehenden Ansprüche, **dadurch gekennzeichnet, dass** die Fahrsituations-Erfassungseinrichtung überprüft, ob der Bremsdruck höher als ein vorbestimmter Bremsdruck bzw. ein Toleranzdruck ist und zudem überprüft, ob die Geschwindigkeit kleiner als ein vorbestimmter beschleunigungsabhängiger Geschwindigkeitswert bzw. eine dynamische Wende-Schwelle ist (303, 502, 503, 504, 505).

9. Bordnetz eines Kraftfahrzeugs, **dadurch gekennzeichnet, dass** das Bordnetz eine programmgesteuerte Fahrsituations-Erfassungseinrichtung aufweist, die ein Verfahren nach einem der vorstehenden Ansprüche ausführt.

10. Programmgesteuerte Fahrsituations-Erfassungseinrichtung, **dadurch gekennzeichnet, dass** die Fahrsituations-Erfassungseinrichtung ein Verfahren nach einem der vorstehenden Ansprüche ausführt oder deren Ausführung veranlasst.

## Claims

1. A method for reducing the energy consumption of a motor vehicle with at least one electric on-board power supply system, to which at least one electric consumer is connected, **characterised in that**
- the voltage level and/or power level of the electric on-board power supply system in a first operating state of the motor vehicle is kept to a first low level,
- the voltage level and/or power level of the electric on-board power supply system in a second operating state of the motor vehicle is temporarily raised to a second higher level, and
- a driving situation detection device provided in the vehicle recognises in advance a substantially directly imminent special driving situation (304) on the basis of the previous behaviour of the driver (102, 104, 105, 107, 108, 110, 111, 201, 205, 206, 210, 212, 213, 302, 303, 401, 403) when controlling the vehicle, and/or of the vehicle and causes the voltage level and/or power level of the electric on-board power supply system to be temporarily raised to the second higher level.

2. A method according to claim 1, **characterised in that** the electric consumer is an electrically actuable steering system of the motor vehicle and the substantially directly imminent special driving situation (304) is a turning operation.

3. A method according to claim 1 or 2, **characterised in that** the position of the driving or accelerator pedal is detected by the driving situation detection device, and the electric voltage and/or electric power is increased when the driving pedal or accelerator pedal is substantially located in its rest position (104, 108, 111, 205, 212, 302) and at least one further driving situation (107, 110, 111, 205, 210, 212, 213, 302, 303) occurs.

4. A method according to any one of the preceding claims, **characterised in that** the acceleration and the speed of the vehicle are detected by the driving situation detection device, and the electric voltage and/or power is increased when the acceleration of the vehicle is negative, the speed falls below (107) a predetermined threshold value and at least one further driving situation (110, 111, 205, 210, 212, 213, 302, 303) occurs.

5. A method according to any one of the preceding claims, **characterised in that** the steering angle of the electric steering system of the vehicle is detected by the driving situation detection device, and the electric voltage and/or power is increased when the absolute value of the steering angle is greater (110) than a predetermined threshold value and at least one further driving situation (107, 111, 205, 210, 212, 213, 302, 303) occurs.

6. A method according to any one of the preceding claims, **characterised in that** the steering angle of the electric steering system of the vehicle is detected by the driving situation detection device, and the electric voltage and/or power is increased when the absolute value of the steering angle is greater (210, 213) than a predetermined speed-dependent steering threshold or steering angle threshold and at least one further driving situation (102, 104, 105, 107, 108, 110, 111, 201, 205, 206, 212, 302, 303, 401, 403) occurs.

7. A method according to claim 2, **characterised in that** the driving situation detection device checks whether the vehicle is swerving (211).

8. A method according to any one of the preceding claims, **characterised in that** the driving situation detection device checks whether the brake pressure is higher than a predetermined brake pressure or a tolerance pressure and also checks whether the speed is less than a predetermined acceleration-dependent speed value or a dynamic turning threshold (303, 502, 503, 504, 505).

9. An electric on-board power supply system of a motor vehicle, **characterised in that** the electric on-board power supply system has a programme-controlled driving situation detection device, which carries out a method according to any one of the preceding claims.

10. A programme-controlled driving situation detection device, **characterised in that** the driving situation detection device carries out a method according to any one of the preceding claims, or causes it to be carried out.

## Revendications

1. Procédé de réduction de la consommation d'énergie d'un véhicule automobile équipé d'au moins un réseau électrique embarqué auquel est raccordé au moins un utilisateur électrique,
procédé **caractérisé en ce qu'**
- on maintient le niveau de tension et/ou le niveau de puissance du réseau électrique embarqué dans un premier état de fonctionnement du véhicule automobile à un premier niveau bas,
- on met le niveau de tension et/ou le niveau de puissance du réseau électrique embarqué dans un second état du véhicule automobile, temporairement à un second niveau plus élevé, et
- une installation de saisie de situation de conduite équipant le véhicule détecte par avance une situation de conduite (304) particulière, imminente, à partir du comportement du conducteur (102, 104, 105, 107, 108, 110, 111, 201, 205, 206, 210, 212, 213, 302, 303, 401, 403), jusqu'alors dans la commande du véhicule et/ou du véhicule même, et cette installation commande la mise du niveau de tension et/ou du niveau de puissance du réseau électrique embarqué, temporairement au second niveau plus élevé.

2. Procédé selon la revendication 1,
**caractérisé en ce que**
l'utilisateur électrique est une direction assistée à commande électrique du véhicule automobile et la situation de conduite particulière (304), imminente, est une manoeuvre de braquage.

3. Procédé selon la revendication 1 ou 2,
**caractérisé en ce qu'**
on saisit la position de la pédale d'accélérateur à l'aide de l'installation de saisie de la situation de conduite et on augmente la tension électrique et/ou la puissance électrique si la pédale d'accélérateur se trouve pratiquement dans sa position de repos (104, 108, 111, 205, 212, 302) et s'il se produit au moins une autre situation de conduite (107, 110, 111, 205, 210, 212, 213, 302, 303).

4. Procédé selon l'une des revendications précédentes,
**caractérisé en ce qu'**
on saisit l'accélération et la vitesse du véhicule à l'aide de l'installation de saisie de la situation de conduite et on augmente la tension électrique et/ou la puissance si l'accélération du véhicule est négative, si la vitesse passe en dessous d'un seuil prédéfini (107), et s'il se produit au moins une autre situation de conduite (110, 111, 205, 210, 212, 213, 302, 303).

5. Procédé selon l'une des revendications précédentes,
**caractérisé en ce qu'**
on saisit l'angle de braquage de la direction électrique du véhicule à l'aide de l'installation de saisie de la situation de conduite et on augmente la tension électrique et/ou la puissance si la valeur absolue de l'angle de braquage est supérieure à un seuil prédéfini (110) et s'il se produit au moins une autre situation de conduite (107, 111, 205, 210, 212, 213, 302, 303).

6. Procédé selon l'une des revendications précédentes,
**caractérisé en ce qu'**
on saisit l'angle de braquage de la direction électrique du véhicule à l'aide de l'installation de saisie de la situation de conduite et on augmente la tension électrique et/ou la puissance si la valeur absolue de l'angle de braquage est supérieure à un seuil de braquage prédéfini ou seuil d'angle de braquage dépendant de la vitesse (210, 213) et s'il se produit au moins une autre situation de conduite (102, 104, 105, 107, 108, 110, 111, 201, 205, 206, 212, 302, 303, 401, 403).

7. Procédé selon la revendication 2,
**caractérisé en ce que**
l'installation de saisie de la situation de conduite vérifie si le véhicule fait une embardée (211).

8. Procédé selon l'une des revendications précédentes,
**caractérisé en ce que**
l'installation de saisie de la situation de conduite, vérifie si la pression des freins dépasse une pression prédéfinie ou une pression de tolérance et vérifie en outre si la vitesse est inférieure à une vitesse prédéfinie dépendant de l'accélération ou un seuil d'inversion dynamique (303, 502, 503, 504, 505).

9. Réseau embarqué de véhicule automobile,
**caractérisé en ce qu'**
il comporte une installation de saisie de la situation de conduite, à commande programmée, exécutant un procédé selon l'une des revendications précédentes.

10. Installation de saisie de situation de conduite, commandée par programme,
**caractérisé en ce qu'**
elle assure l'exécution d'un procédé selon l'une des revendications précédentes.
